# EUROPEAN PATENT APPLICATION

(11) **EP 4 550 801 A1**
(43) Date of publication of application: **07.05.2025**
(21) Application number: 23830269.9
(22) Date of filing: 27.06.2023
(51) Int. Cl.: H04N 21/258

(54) **METHOD AND APPARATUS FOR PUSHING VIDEO, AND STORAGE MEDIUM**

(30) Priority: 01.07.2022 CN 202210769349
(71) Applicant: DOUYIN VISION CO., LTD., Beijing 100041 (CN); Beijing Zitiao Network Technology Co., Ltd., Beijing 100190 (CN); Lemon Inc., Grand Cayman, KY1-1205 (KY)
(72) Inventor: ZHOU, Yiduo, Beijing 100028 (CN); LI, Jiajia, Beijing 100028 (CN); ZENG, Mengze, 018960 (SG); YANG, Tong, Beijing 100028 (CN); ZHANG, Haoran, Beijing 100028 (CN); GUO, Lei, Beijing 100028 (CN); ZHANG, Siyao, 018960 (SG); HU, Xin, Beijing 100028 (CN); FOO, Benjamin Zhizhong, 018960 (SG); HUANG, Can, Beijing 100028 (CN)
(74) Representative: Dentons UK and Middle East LLP
(86) International application number: PCT/CN2023/102858
(87) International publication number: WO 2024/002092

(57) **Abstract**

The present disclosure relates to the technical field of multimedia, and in particular to a method and apparatus for pushing a video, and a storage medium. The method for pushing a video comprises : acquiring one or more videos, the one or more videos comprise a video having a photosensitive identifier and a video having no photosensitive identifier, wherein each video has a photosensitive identifier if the video is determined to be a photosensitive video by a photosensitive video recognition model; and if a browsing user is in a state of filtering the photosensitive video, pushing, to the browsing user, the video having no photosensitive identifier in the one or more videos.

## Description

### CROSS-REFERENCE TO RELATED APPLICATIONS

This application is based on the application with a CN application number of 202210769349.6 and the filing date being on July 1, 2022, and claims its priority. The disclosure of this CN application as a whole is incorporated into the present application herein by reference.

### TECHNICAL FIELD

The present disclosure relates to the field of multimedia technologies, and in particular, to a method and an apparatus of video transmission, and a storage medium.

### BACKGROUND

Photosensitive epilepsy is a disease caused by visual stimuli such as strong light source stimuli and flash stimuli. At present, game and animation production companies try to reduce the possibility of triggering photosensitive epilepsy by reducing the contrast when making scenes with strong visual stimulation, and photosensitive epilepsy warnings usually need to be added at the beginning of their works.

Video creators are no longer limited to professional media companies with the popularization of the Internet, terminals and multimedia technologies. Ordinary users can also shoot videos by themselves and publish videos on the network for other users to watch. Some video applications can predict videos that a browsing user may be interested in and push the predicted videos to the browsing user. The simplicity of video production and publishing has resulted in a large number of video creators. However, some video creators do not have a deep understanding of photosensitive epilepsy.

### SUMMARY

According to a first aspect of some embodiments of the present disclosure, a method of video transmission is provided, comprising: acquiring videos comprising video(s) with a photosensitive tag and video(s) without a photosensitive tag, wherein each video has a photosensitive tag in response to be determined as a photosensitive video by a photosensitive video recognition model; and transmitting video(s) that do not have a photosensitive tag among the videos to a browsing user in response to the browsing user being in a state of photosensitive video filtering.

In some embodiments, the method of video transmission further comprises: acquiring feedback of the browsing user on a browsed video; and marking the browsed video as a photosensitive video and adding the browsed video to a training set in response to the feedback indicating that the browsed video is a photosensitive video, wherein the training set is used to train the photosensitive video recognition model.

In some embodiments, for each video, the video has a photosensitive tag in response to a photosensitive effect being added to the video.

In some embodiments, the method of video transmission further comprises: transmitting the videos to the browsing user in response to the browsing user being not in the state of photosensitive video filtering.

In some embodiments, the method of video transmission further comprises: displaying an option control for selecting whether to filter photosensitive videos in response to a video to be played being a video with a photosensitive tag; receiving an operation of the browsing user on the option control; and setting the browsing user to the State of photosensitive video filtering in response to the operation indicating filtering of photosensitive videos.

In some embodiments, an option control for selecting whether to filter photosensitive videos is displayed in response to the video to be played back being a video with a photosensitive tag that the browsing user browses firstly under a same account or on a same terminal.

In some embodiments, the option control is located on a mask layer that is located over the video to be played.

According to a second aspect of some embodiments of the present disclosure, a method of video transmission is provided, comprising: acquiring a video uploaded by a creator; processing the uploaded video using a photosensitive video recognition model to determine whether the uploaded video is a photosensitive video; adding a photosensitive tag to the uploaded video in response to the uploaded video being a photosensitive video; and transmitting a video without a photosensitive tag to a browsing user in response to the browsing user being in a State of photosensitive video filtering.

In some embodiments, the method of video transmission further comprises: sending a notification to the creator after determining that the uploaded video is a photosensitive video.

In some embodiments, the method of video transmission further comprises: receiving feedback sent by the creator after sending the notification to the creator; and marking the uploaded video as a non-photosensitive video and adding it to a training set in response to the feedback indicating that the uploaded video is a not a photosensitive video, wherein the training set is used to train the photosensitive video recognition model.

In some embodiments, the photosensitive video recognition model is a neural network model.

According to a third aspect of some embodiments of the present disclosure, an apparatus of video transmission is provided, comprising: a memory; a processor coupled to the memory, the processor configured to, based on instructions stored in the memory, carry out any one of the foregoing method of video transmission.

According to a fourth aspect of some embodiments of the present disclosure, there is provided a computer-readable storage medium on which a computer program is stored, wherein the program when executed by a processor carries out any one of the foregoing method of video transmission.

According to a fifth aspect of some embodiments of the present invention, a computer program product is provided, which when executed on a computer causes the computer to implement any one of the foregoing method of video transmission.

According to a sixth aspect of some embodiments of the present invention, a computer program is provided, the computer program includes instructions that, when executed by a processor, cause the processor to perform any one of the foregoing method of video transmission.

Other features and advantages of the present invention will become apparent from the following detailed description of exemplary embodiments of the present disclosure with reference to the accompanying drawings.

### BRIEF DESCRIPTION OF THE DRAWINGS

In order to more clearly explain the embodiments of the present invention or the technical solutions in the prior art, a brief introduction will be given below for the drawings required to be used in the description of the embodiments or the prior art. It is obvious that, the drawings illustrated as follows are merely some embodiments of the present disclosure. For a person skilled in the art, he or she may also acquire other drawings according to such drawings on the premise that no inventive effort is involved.
FIG. 1 shows a schematic flowchart of a method of video transmission according to some embodiments of the present disclosure;
FIG. 2 shows a schematic flowchart of a method of video transmission according to other embodiments of the present disclosure;
FIG. 3 shows a schematic flowchart of a feedback method of a browsing user according to some embodiments of the present disclosure;
FIG. 4 shows a schematic flowchart of a feedback method of a creator according to some embodiments of the present disclosure;
FIG. 5 shows a schematic flowchart of a user state setting method according to some embodiments of the present disclosure;
FIG. 6 shows a schematic structural diagram of an apparatus of video transmission according to some embodiments of the present disclosure;
FIG. 7 shows a schematic structural diagram of an apparatus of video transmission according to other embodiments of the present disclosure;
FIG. 8 shows a schematic structural diagram of an apparatus of video transmission according to still other embodiments of the present disclosure;
FIG. 9 shows a schematic structural diagram of an apparatus of video transmission according to still other embodiments of the present disclosure.

### DETAILED DESCRIPTION

Below, a clear and complete description will be given for the technical solution of embodiments of the present disclosure with reference to the figures of the embodiments. Obviously, merely some embodiments of the present disclosure, rather than all embodiments thereof, are given herein. The following description of at least one exemplary embodiment is in fact merely illustrative and is in no way intended as a limitation to the invention, its application or use. All other embodiments obtained by persons of ordinary skill in the art based on the embodiments of the present disclosure without creative efforts shall fall within the protection scope of the present disclosure.

Unless otherwise specified, the relative arrangement, numerical expressions and numerical values of the components and steps set forth in these examples do not limit the scope of the invention.

At the same time, it should be understood that, for ease of description, the dimensions of the various parts shown in the drawings are not drawn to actual proportions.

Techniques, methods, and apparatus known to those of ordinary skill in the relevant art may not be discussed in detail, but where appropriate, these techniques, methods, and apparatuses should be considered as part of the specification.

Of all the examples shown and discussed herein, any specific value should be construed as merely illustrative and not as a limitation. Thus, other examples of exemplary embodiments may have different values.

Notice that, similar reference numerals and letters are denoted by the like in the accompanying drawings, and therefore, once an article is defined in a drawing, there is no need for further discussion in the accompanying drawings.

Because some video creators have little knowledge of photosensitive epilepsy, they are likely to publish videos that can trigger photosensitive epilepsy. It is easy to cause discomfort to who are sensitive to photosensitive videos, or even trigger them to get sick when such videos are pushed to them.

A technical problem to be solved by the present disclosure is: how to reduce the impact on users who are sensitive to photosensitive videos in video push, and improve the safety of video viewing.

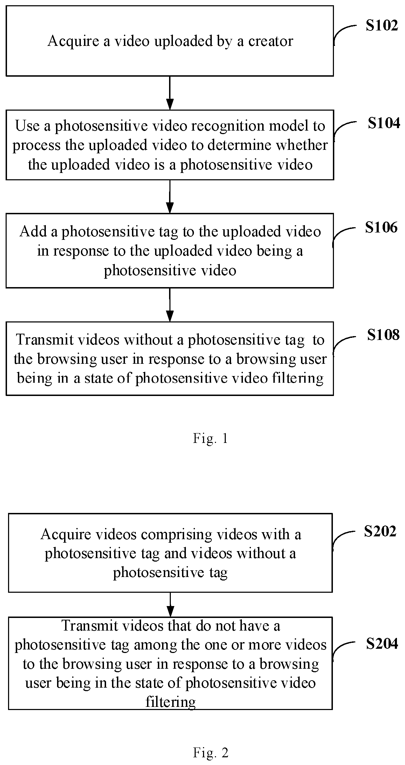

FIG. 1 shows a schematic flowchart of a method of video transmission according to some embodiments of the present disclosure. This embodiment can be deployed in a server of a video push application. It can also be deployed in other devices as needed, which will not be described in detail herein.

As shown in FIG. 1, the method of video transmission of this embodiment comprises steps S102 to S108.

In step S102, a video uploaded by a creator is acquired.

For example, the creator uploads a video stored in the creator's terminal or stored on the network through an upload interface provided by a video push application. The video may be shot by the creator, or generated by editing video materials, which is not limited in the present disclosure.

In step S104, a photosensitive video recognition model is used to process the uploaded video to determine whether the uploaded video is a photosensitive video.

In some embodiments, the photosensitive video recognition model is a neural network model. For example, the uploaded video is input into a pre-trained photosensitive video recognition model to obtain a predicted probability calculated by the photosensitive video recognition model, the predicted probability representing the probability that the uploaded video is a photosensitive video or the probability that it is not a photosensitive video. By comparing the predicted probability with a preset threshold, a judgment result of whether the uploaded video is a photosensitive video can be obtained.

In step S106, a photosensitive tag is added to the uploaded video if the uploaded video is a photosensitive video.

The photosensitive tag is stored, for example, in metadata or attribute information of the video. In addition, a corresponding relationship between an identifier of the video and the photosensitive tag can also be stored using a data table and a key-value pair.

In some embodiments, a field indicating "photosensitive" is added to the information corresponding to the video, and different field values are used to indicate whether the corresponding video has a photosensitive tag. For example, a new field Photosensitive is added. When Photosensitive = 1, it means that the video has a photosensitive tag. When Photosensitive = 0 or Photosensitive = NULL, it means that the video does not have a photosensitive tag.

In some embodiments, the video push application provides the creator with some preset special effects. After the creator uploads a video, these special effects can be added to provide more visual effects for the video. Photosensitive effects among these effects can be marked in advance. A photosensitive tag can also be added to the video when a photosensitive effect is added to an uploaded video. Therefore, an uploaded video can also be accurately marked in the case where the video itself is not a photosensitive video, but is changed into a photosensitive video due to the addition of a photosensitive special effect after uploading.

In some embodiments, a notification is sent to the creator upon determining that the uploaded video is a photosensitive video. Thus, the creator can know that the uploaded video is a photosensitive video. For example, the notification can be sent through an In-App message in the video push application, or it can be sent in an Off-App manner such as a short message or an email based on communication information provided by the creator in advance. In addition to the recognition result of the video, the notification may also comprise relevant knowledge about photosensitive videos and photosensitive epilepsy, so that more and more creators can pay attention to avoiding related visual effects in their subsequent video creation. Thereby, the safety of video viewing can be substantially improved.

In step S108, videos without a photosensitive tag are transmitted to the browsing user in response to a browsing user being in a state of photosensitive video filtering.

Browsing users can specify whether to filter photosensitive videos according to their needs. Videos with a photosensitive tag cannot be browsed by the browsing user if the browsing user is in the state of photosensitive video filtering.

It should be pointed out that the creator and browsing user in the present disclosure are only identities with respect to a certain video. In an actual application scenario, a certain user may be the creator of a video, and may also be a browsing user of other videos.

In some embodiments, the transmitted video is located in a video feed, which may be a long video feed or a short video feed. Users can watch different videos transmitted for them by switching operations.

An embodiment of a method of video transmission will be described below from the perspective of a browsing user with reference to FIG. 2.

FIG. 2 shows a schematic flowchart of a method of video transmission according to other embodiments of the present disclosure. This embodiment can be deployed in a server of a video push application. It can also be deployed in other devices as needed, which will not be described in detail herein.

As shown in FIG. 2, the method of video transmission of this embodiment includes steps S202 to S204.

In step S202, one or more videos comprising videos with a photosensitive tag and videos without a photosensitive tag are acquired, wherein a video has a photosensitive tag if it is determined as a photosensitive video by a photosensitive video recognition model.

The acquired one or more videos will be pushed (transmitted) to a user. For example, the server determine videos that a user may be interested in through calculation according to a recommendation algorithm, and prepares to push these videos to the user. Before the push operation, photosensitive videos can be marked by the recognition result of the photosensitive video recognition model, so as to assist the server to further determine whether to push all these videos to the user.

In step S204, videos that do not have a photosensitive tag among the one or more videos are transmitted to the browsing user in a case that a browsing user is in the state of photosensitive video filtering.

In some embodiments, the one or more videos are transmitted to the browsing user if the browsing user is not in the state of photosensitive video filtering. That is, the browsing user can view both videos with a photosensitive tag and videos without a photosensitive tag.

In the above embodiment, an uploaded video is recognized by the photosensitive video recognition model, and a photosensitive tag is added to the video if it is determined as a photosensitive video by the model. Therefore, videos without a photosensitive tag are transmitted to a browsing user if the browsing user chooses to filter photosensitive videos, so as to avoid the adverse effect of photosensitive videos on photosensitive epileptics and other users who are sensitive to photosensitive videos, thereby improving the safety of video viewing.

Using a neural network model as the photosensitive video recognition model as an example, a model training process will be exemplarily described below.

First, a training set is constructed, which comprises photosensitive videos and non-photosensitive videos manually screened and labeled, for example. Then, the videos in the training set are input into the neural network model to obtain prediction results of the model. Finally, a loss value of the model is calculated according to the difference between the prediction results of the model and the labels, and the parameters of the model are adjusted based on the loss value. After several iterations, the training is stopped after a convergence condition has been met, and a photosensitive video recognition model is obtained.

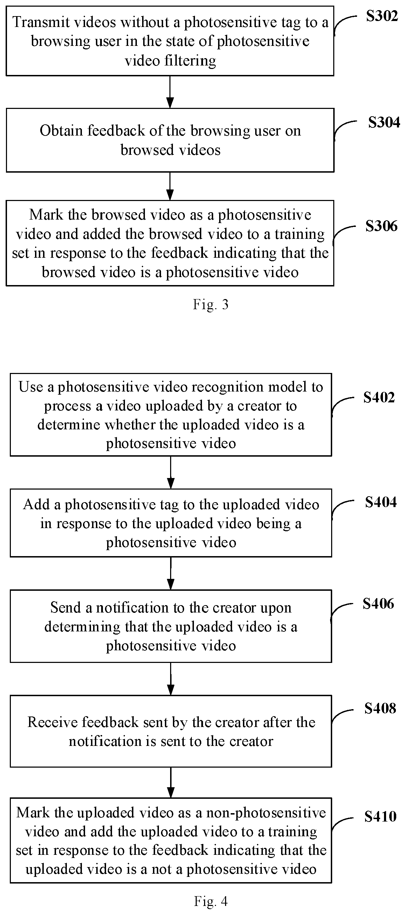

Some embodiments of the present disclosure also provide a user feedback mechanism, through which the training set can be expanded to further improve the accuracy of the model. An embodiment of training a model through user feedback will be described below with reference to FIG. 3 and FIG. 4, respectively.

FIG. 3 shows a schematic flowchart of a feedback method of browsing user according to some embodiments of the present disclosure. As shown in FIG. 3, the feedback method of browsing user of this embodiment comprises steps S302 to S306.

In step S302, videos without a photosensitive tag are transmitted to a browsing user in the state of photosensitive video filtering.

In step S304, feedback of the browsing user on browsed videos is obtained.

The browsing user can submit feedback indicating that the browsed video is a photosensitive video if a photosensitive video is stilled pushed to the browsing user during his/her browsing process after setting the state of photosensitive video filtering.

A feedback control can be provided in the video push application. After the browsing user triggers the feedback control, a preset type of feedback indicating the browsing of a photosensitive video can be selected, or feedback contents can be manually input.

In step S306, the browsed video is marked as a photosensitive video and added to a training set if the feedback indicates that the browsed video is a photosensitive video, wherein the training set is used to train a photosensitive video recognition model.

In some embodiments, after receiving the feedback from the browsing user, the feedback information can be further reviewed, and the corresponding video is added to the training set after the review is passed. The review may be done manually, or may be done automatically according to preset review rules or a review algorithm.

Therefore, through the feedback of the browsing user, a photosensitive video that the model cannot recognize can be marked and added to the training set, which is helpful to improve the accuracy of the model.

FIG. 4 shows a schematic flowchart of a feedback method of creator according to some embodiments of the present disclosure. As shown in FIG. 4, the feedback method of creator of this embodiment comprises steps S402 to S410.

In step S402, a photosensitive video recognition model is used to process a video uploaded by a creator to determine whether the uploaded video is a photosensitive video.

In step S404, a photosensitive tag is added to the uploaded video in response to the uploaded video being a photosensitive video.

In step S406, a notification is sent to the creator upon determining that the uploaded video is a photosensitive video.

In step S408, feedback sent by the creator is received after the notification is sent to the creator. For example, the creator can appeal through feedback if the creator believes that the uploaded video is not a photosensitive video.

In step S410, the uploaded video is marked as a non-photosensitive video and added to a training set in response to the feedback indicating that the uploaded video is a not a photosensitive video, wherein the training set is used to train a photosensitive video recognition model.

In some embodiments, after receiving the feedback from the creator, the feedback information can be further reviewed, and the corresponding video is added to the training set after the review is passed. The review may be done manually, or may be done automatically according to preset review rules or a review algorithm.

Therefore, a non-photosensitive video that has been mis-recognized by the model can be marked and added to the training set through the feedback of the creator, which is helpful to improve the accuracy of the model.

The above two feedback mechanisms can use user feedback to identify mis-recognition of the model, and collect more training data to further optimize the model, thereby improving the prediction accuracy of the model. Therefore, better guarantee of safety can be achieved for users during the video viewing process.

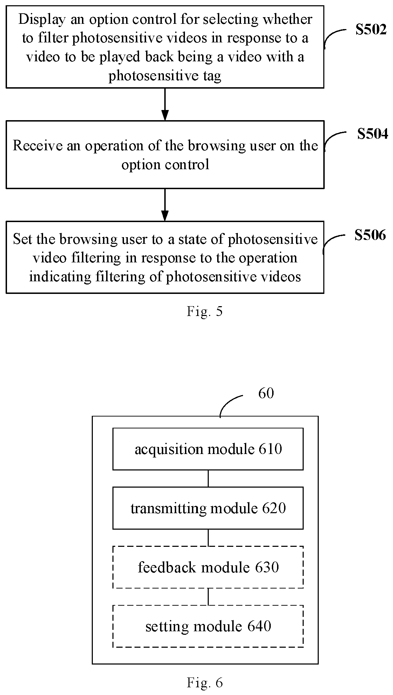

An embodiment of a user state setting method of the present disclosure with reference to FIG. 5 below.

FIG. 5 shows a schematic flowchart of a user state setting method according to some embodiments of the present disclosure. As shown in FIG. 5, the user state setting method of this embodiment includes steps S502 to S506.

In step S502, an option control for selecting whether to filter photosensitive videos is displayed in response to a video to be played back being a video with a photosensitive tag.

For example, the video push application acquires several videos and transmits them to a user for playback in sequence. Before the playback of each video, the video push application checks whether the video to be played has a photosensitive tag. If there is no photosensitive tag, the video will be played normally; if there is a photosensitive tag, an option control will be displayed.

In some embodiments, to avoid the user from making the same settings frequently, the option control is only displayed in the situation of the user's "first browsing". "First browsing" refers to first browsing under the same account, or first browsing on the same terminal. That is, if the video to be played is a video with a photosensitive tag that the browsing user firstly browses under the same account or on the same terminal, an option control for selecting whether to filter photosensitive videos is displayed.

In some embodiments, the option control is located on a mask layer that is located over the video to be played back. The transparency of the mask layer is lower than a preset value, or has the effect of background blurring to block the underlying photosensitive video, so that the user's attention is focused on the option control.

In step S504, an operation of the browsing user on the option control is received.

In step S506, the browsing user is set to a state of photosensitive video filtering in response to the operation indicating filtering of photosensitive videos.

Through the above embodiment, a user can specify whether to filter photosensitive videos as desired, thereby improving the viewing safety of users who are sensitive to photosensitive videos and the viewing freedom of users who are not sensitive to photosensitive videos. Moreover, since many browsing users are also video creators, this setting process can also play a role in popularizing knowledge about photosensitive videos.

An embodiment of a apparatus of video transmission of the present disclosure will be described with reference to FIG. 6 below.

FIG. 6 shows a schematic structural diagram of a apparatus of video transmission according to some embodiments of the present disclosure. As shown in FIG. 6, the apparatus of video transmission 60 of this embodiment comprises: an acquisition module 610, configured to acquire videos comprising video(s) with a photosensitive tag and video(s) without a photosensitive tag, wherein each video has a photosensitive tag if it is determined as a photosensitive video by a photosensitive video recognition model; and a transmitting module 620, configured to transmitting video(s) that do not have a photosensitive tag among the videos to a browsing user in case that the browsing user is in a state of photosensitive video filtering.

In the above embodiment, an uploaded video is recognized by the photosensitive video recognition model, and a photosensitive tag is added to the video if it is determined as a photosensitive video by the model. Therefore, videos without a photosensitive tag are transmitted to a browsing user if the browsing user chooses to filter photosensitive videos, so as to avoid the adverse effect of photosensitive videos on photosensitive epileptics and other users who are sensitive to photosensitive videos, thereby improving the safety of video viewing.

In some embodiments, the apparatus of video transmission 60 further comprises: a feedback module 630, configured to acquire feedback of the browsing user on a browsed video; mark the browsed video as a photosensitive video and adding the browsed video to a training set in case that the feedback indicates that the browsed video is a photosensitive video, wherein the training set is used to train the photosensitive video recognition model.

In some embodiments, for each video, the video has a photosensitive tag if a photosensitive effect has been added to the video.

In some embodiments, the transmitting module 620 is further configured to transmit the videos to the browsing user if the browsing user is not in the state of photosensitive video filtering.

In some embodiments, the apparatus of video transmission 60 further comprises: a setting module 640, configured to display an option control for selecting whether to filter photosensitive videos in the case that a video to be played is a video with a photosensitive tag; receive an operation of the browsing user on the option control; and set the browsing user to the State of photosensitive video filtering if the operation indicates filtering of photosensitive videos.

In some embodiments, the setting module 640 is further configured to display an option control for selecting whether to filter photosensitive videos if the video to be played back is a video with a photosensitive tag that the browsing user browses firstly under a same account or on a same terminal.

In some embodiments, the option control is located on a mask layer that is located over the video to be played.

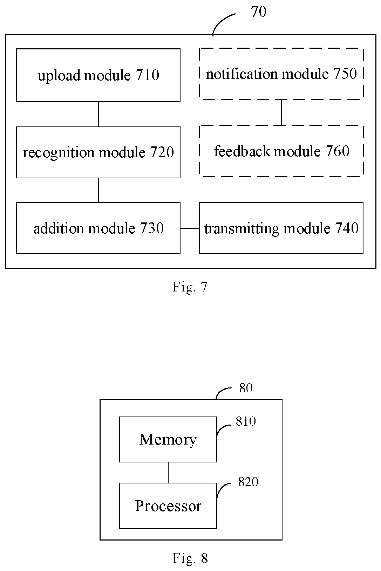

An embodiment of an apparatus of video transmission of the present disclosure will be described with reference to FIG. 7 below.

FIG. 7 shows a schematic structural diagram of an apparatus of video transmission according to other embodiments of the present disclosure. As shown in FIG. 7, the apparatus of video transmission 70 of this embodiment comprises: an upload module 710, configured to acquire a video uploaded by a creator; a recognition module 720, configured to process the uploaded video using a photosensitive video recognition model to determine whether the uploaded video is a photosensitive video; an addition module 730, configured to add a photosensitive tag to the uploaded video in case that the uploaded video is a photosensitive video; a transmitting module 740, configured to transmit a video without a photosensitive tag to a browsing user if the browsing user is in a State of photosensitive video filtering.

In the above embodiment, an uploaded video is recognized by the photosensitive video recognition model, and a photosensitive tag is added to the video if it is determined as a photosensitive video by the model. Therefore, videos without a photosensitive tag are transmitted to a browsing user if the browsing user chooses to filter photosensitive videos, so as to avoid the adverse effect of photosensitive videos on photosensitive epileptics and other users who are sensitive to photosensitive videos, thereby improving the safety of video viewing.

In some embodiments, the apparatus of video transmission 70 further comprises: a notification module 750, configured to send a notification to the creator after determining that the uploaded video is a photosensitive video.

In some embodiments, the apparatus of video transmission 70 further comprises: a feedback module 760, configured to receive feedback sent by the creator after sending the notification to the creator; and mark the uploaded video as a non-photosensitive video and adding it to a training set if the feedback indicates that the uploaded video is a not a photosensitive video, wherein the training set is used to train the photosensitive video recognition model.

In some embodiments, the photosensitive video recognition model is a neural network model.

As required, the apparatus of video transmission 60 and the apparatus of video transmission 70 may be provided together in the same apparatus, or may be separately provided in different apparatus, which is not limited in the present disclosure.

FIG. 8 shows a schematic structural diagram of an apparatus of video transmission according to still other embodiments of the present disclosure. As shown in FIG. 8, the apparatus of video transmission 80 of this embodiment comprises: a memory 810 and a processor 820 coupled to the memory 810, the processor 820 configured to, based on instructions stored in the memory 810, carry out the method of video transmission according to any one of the foregoing embodiments.

The memory 810 may comprise, for example, system memory, a fixed non-volatile storage medium, or the like. The system memory stores, for example, an operating system, application programs, a boot loader, and other programs.

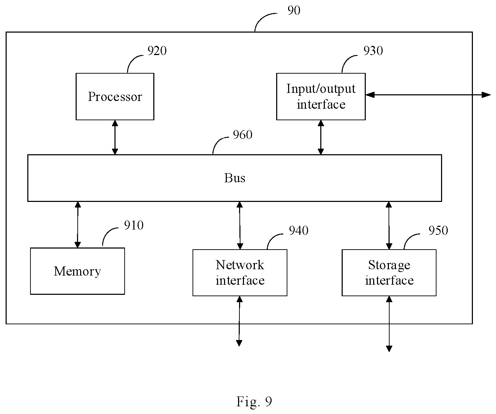

FIG. 9 shows a schematic structural diagram of an apparatus of video transmission according to still other embodiments of the present disclosure. As shown in FIG. 9, the apparatus of video transmission 90 of this embodiment comprises: a memory 910 and a processor 920, and may further include an input-output interface 930, a network interface 940, a storage interface 950, and the like. These interfaces 930, 940, 950 and the memory 910 and the processor 920 may be connected to each other through a bus 960, for example. The input-output interface 930 provides a connection interface for input-output devices such as a display, a mouse, a keyboard, and a touch screen. The network interface 940 provides a connection interface for various networked devices. The storage interface 950 provides a connection interface for external storage devices such as an SD card and a USB flash disk.

An embodiment of the present invention further provides a computer-readable storage medium on which a computer program is stored, characterized in that the program when executed by a processor implements any one of the foregoing method of video transmission.

One skilled in the art should understand that, the embodiments of this invention may be provided as a method, a system, or a computer program product. Therefore, embodiments of this invention can take the form of an entirely hardware embodiment, an entirely software embodiment or an embodiment containing both hardware and software elements. Moreover, the present invention may take the form of a computer program product embodied on one or more computer-usable non-transitory storage media (including but not limited to disk storage, CD-ROM, optical memory, etc.) having computer-usable program code embodied therein.

The present invention has been described with reference to flow charts and/or block diagrams of methods, apparatuses (systems) and computer program products according to embodiments of the present invention. It should be understood that each process and/or block in the flowcharts and/or block diagrams, and combinations of the processes and/or blocks in the flowcharts and/or block diagrams may be implemented by computer program instructions. The computer program instructions may be provided to a processor of a general purpose computer, a special purpose computer, an embedded processor, or other programmable data processing apparatus to generate a machine such that the instructions executed by a processor of a computer or other programmable data processing apparatus to generate means implementing the functions specified in one or more flows of the flowcharts and/or one or more blocks of the block diagrams.

The computer program instructions may also be stored in a computer readable storage device capable of directing a computer or other programmable data processing apparatus to operate in a specific manner such that the instructions stored in the computer readable storage device produce an article of manufacture including instruction means implementing the functions specified in one or more flows of the flowcharts and/or one or more blocks of the block diagrams.

These computer program instructions can also be loaded onto a computer or other programmable device to perform a series of operation steps on the computer or other programmable device to generate a computer-implemented process such that the instructions executed on the computer or other programmable device provide steps implementing the functions specified in one or more flows of the flowcharts and/or one or more blocks of the block diagrams.

The above is merely preferred embodiments of this invention, and is not limitation to this invention. Within spirit and principles of this utility model, any modification, replacement, improvement and etc. shall be contained in the protection scope of this invention.

## Claims

1. A method of video transmission, comprising:
acquiring videos comprising video(s) with a photosensitive tag and video(s) without a photosensitive tag, wherein each video has a photosensitive tag in response to be determined as a photosensitive video by a photosensitive video recognition model; and
transmitting video(s) that do not have a photosensitive tag among the videos to a browsing user in response to the browsing user being in a state of photosensitive video filtering.

2. The method of video transmission according to claim 1, further comprising:
acquiring feedback of the browsing user on a browsed video; and
marking the browsed video as a photosensitive video and adding the browsed video to a training set in response to the feedback indicating that the browsed video is a photosensitive video, wherein the training set is used to train the photosensitive video recognition model.

3. The method of video transmission according to claim 1 or 2, wherein for each video, the video has a photosensitive tag in response to a photosensitive effect being added to the video.

4. The method of video transmission according to any one of claims 1 to 3, further comprising:
transmitting the videos to the browsing user in response to the browsing user being not in the state of photosensitive video filtering.

5. The method of video transmission according to any one of claims 1 to 4, further comprising:
displaying an option control for selecting whether to filter photosensitive videos in response to a video to be played being a video with a photosensitive tag;
receiving an operation of the browsing user on the option control; and
setting the browsing user to the State of photosensitive video filtering in response to the operation indicating filtering of photosensitive videos.

6. The method of video transmission according to claim 5, wherein an option control for selecting whether to filter photosensitive videos is displayed in response to the video to be played back being a video with a photosensitive tag that the browsing user browses firstly under a same account or on a same terminal.

7. The method of video transmission according to claim 5 or 6, wherein the option control is located on a mask layer that is located over the video to be played.

8. A method of video transmission, comprising:
acquiring a video uploaded by a creator;
processing the uploaded video using a photosensitive video recognition model to determine whether the uploaded video is a photosensitive video;
adding a photosensitive tag to the uploaded video in response to the uploaded video being a photosensitive video; and
transmitting a video without a photosensitive tag to a browsing user in response to the browsing user being in a State of photosensitive video filtering.

9. The method of video transmission according to claim 8, further comprising:
sending a notification to the creator after determining that the uploaded video is a photosensitive video.

10. The method of video transmission according to claim 9, further comprising:
receiving feedback sent by the creator after sending the notification to the creator; and
marking the uploaded video as a non-photosensitive video and adding it to a training set in response to the feedback indicating that the uploaded video is a not a photosensitive video, wherein the training set is used to train the photosensitive video recognition model.

11. The method of video transmission according to any one of claims 8 to 10, wherein the photosensitive video recognition model is a neural network model.

12. A apparatus of video transmission, comprising:
a memory; and
a processor coupled to the memory, the processor configured to, based on instructions stored in the memory, carry out the method of video transmission according to any one of claims 1 to 11.

13. A computer-readable storage medium having stored thereon a computer instructions which, when executed by a processor, cause the processor to implement the method of video transmission according to any one of claims 1 to 11.

14. A computer program product that when running on a computer causes the computer to implement the method of video transmission according to any one of claims 1 to 11.

15. A computer program, comprising:
instructions that, when executed by a processor, cause the processor to perform the method of video transmission according to any one of claims 1 to 11.
